# EUROPÄISCHE PATENTSCHRIFT

(11) **EP 1 868 760 B1**
(45) Veröffentlichungstag und Bekanntmachung des Hinweises auf die Patenterteilung: **11.04.2012**
(21) Anmeldenummer: 06708148.9
(22) Anmeldetag: 09.02.2006
(51) Int. Cl.: B23H 7/10

(54) **ERODIERMASCHINE MIT MAGNETISCHER ELEKTRODENFÜHRUNG**
DEVICE FOR ELECTRICAL DISCHARGE MACHINING WITH MAGNETIC ELECTRODE GUIDE
DISPOSITIF D'USINAGE PAR ELECTRO-EROSION AVEC GUIDE-ELECTRODE MAGNETIQUE

(30) Priorität: 01.04.2005 DE 102005015107
(43) Veröffentlichungstag der Anmeldung: 26.12.2007
(73) Patentinhaber: Robert Bosch GmbH, 70442 Stuttgart (DE)
(72) Erfinder: HOPF, Wilhelm, 74343 Sachsenheim (DE); SCHOEPF, Martin, 70499 Stuttgart (DE); SCHAEFER, Bernd, 71636 Ludwigsburg (DE)
(86) Internationale Anmeldenummer: PCT/EP2006/050804
(87) Internationale Veröffentlichungsnummer: WO 2006/103135

(56) Entgegenhaltungen:
- DE-A1- 10 155 607
- US-A- 2 731 212
- US-A- 4 990 738
- PATENT ABSTRACTS OF JAPAN Bd. 009, Nr. 152 (M-391), 27. Juni 1985 (1985-06-27) & JP 60 029241 A (INOUE JAPAX KENKYUSHO KK), 14. Februar 1985 (1985-02-14)

## Beschreibung

### Stand der Technik

Die Erfindung betrifft eine Erodiermaschine mit einer Elektrodenführung für eine Elektrode zur funkenerosiven Bearbeitung eines Werkstückes nach dem Oberbegriff des Anspruchs 1. Eine solche Erodiermaschine ist aus der US 4, 990, 738 A1 bekannt.

Bei einer funkenerosiven Bearbeitung eines Werkstückes wird zwischen einer Elektrode und einem Werkstück eine elektrische Entladung verursacht. Das Werkstück wird dadurch in eine gewünschte Konfiguration "erodiert", d. h. geschmolzen oder geschnitten. Dabei kann das Werkstück relativ zur Elektrode - oder umgekehrt - bewegt werden. Die Elektrode weist typischerweise die Form eines Drahtes oder eines Stabes auf und wird daher auch Drahtelektrode genannt. Die Herstellung solcher Drahtelektroden wird beispielsweise in EP 0 850 716 B1 oder EP 1 106 293 B1 beschrieben.

Eine wichtige Anwendung der funkenerosiven Bearbeitung ist die Herstellung von Mikrobohrungen, beispielsweise für Kraftstoffeinspritzventile. Um eine Bohrung bzw. Aussparung mit einer möglichst geringen Toleranz zu erhalten, besteht Bedarf nach präziser Elektrodenführung, die eine kontrollierte Positionierung der Elektrode gewährleistet. Bekannte Elektrodenführungen wie beispielsweise Keramikröhrchen sind für bestimmte Elektrodendurchmesser ausgelegt und müssen daher bei Änderung des Elektrodendurchmessers selbst ausgetauscht werden. Eine Elektrodenführung für Erodiermaschinen, bei der sich die Elektrodenführung den unterschiedlichen Durchmessern der Drahtelektroden anpasst, wird in der DE 101 03 292 A1 beschrieben. Es wird eine Elektrodenführung für eine Elektrode vorgeschlagen, die eine Prismenführung, bestehend aus einem Halteteil und einem Andrückteil, aufweist. Die Elektrode wird zwischen dem Andrückteil und dem Halteteil angeordnet und spielfrei geführt. Eine nutförmige Aussparung ist im Halteteil oder Andrückteil ausgebildet und das Andrückteil wird mittels einer Vorspanneinrichtung gegen das Halteteil gedrückt, um jeweils gewünschte Andrückkräfte für Elektroden mit unterschiedlichen Durchmessern bereitzustellen, ist die Andrückkraft des Andrückteils einstellbar.

Ein Nachteil der oben beschriebenen Vorrichtung besteht darin, dass die Elektrode zur Fixierung ihrer Lage vom Andrückteil gegen das Halteteil gedrückt wird und somit einen ständigen mechanischen Druck erleidet. Je nach Belastung sind an der Elektrode oder an der Elektrodenführung Verschleißerscheinungen zu erwarten.

Aus der US 4,990,738 A1 ist eine Vorschubeinheit für das funkenerosive Drahtschneiden bekannt, welches auf einem elektromagnetischen Prinzip beruht, bei welchem ein elektromagnetisches Feld mit einer Vielzahl von Spulen generiert wird.

Aus der DE 101 55 607 A1 ist bekannt, durch ein Magnetfeld eine Elektrodendurchbiegung zur Regelung des Funkenspalts beim Senkerodieren zu erreichen. Durch seitliche Ablenkung einer Werkzeugelektrode wird eine axiale Bewegung eines freien Endteils hervorgerufen, womit eine Feinregelung geschaffen wird.

Es ist daher Aufgabe der vorliegenden Erfindung, eine Erodiermaschine zur funkenerosiven Bearbeitung bereitzustellen, welche eine verschleißfreie, einfachexund gleichzeitig vom Elektrodendurchmesser unabhängige Elektrodenführung gewährleistet.

### Vorteile der Erfindung

Die erfindungsgemäße Erodiermaschine hat den Vorteil, dass die Elektrodenführung kontaktfrei die Elektrode führt bzw. kontrolliert. Dadurch können Verschleißerscheinungen vermieden werden, wobei gleichzeitig eine präzise Führung der Elektrode erreicht wird. Weiter ist eine flexible Anwendung der Elektrodenführung möglich, da die Elektrodenführung bei einer Änderung des Elektrodendurchmessers nicht selbst ausgewechselt werden muss.

Vorteilhafte Weiterbildungen der Erodiermaschine sind in den Unteransprüchen angegeben und in der Beschreibung beschrieben.

### Zeichnung

Ausführungsbeispiele der Erfindung werden anhand der Zeichnung und der nachfolgenden Beschreibung näher erläutert. Es zeigen:
Figur 1 eine Erodiermaschine mit einer Elektrodenführung,
Figuren 2a und 2b eine Elektrodenführung aus mehreren Dauermagneten in Draufsicht und
Figur 3 eine weitere Ausführung der Elektrodenführung im Schnitt.

### Beschreibung der Ausführungsbeispiele

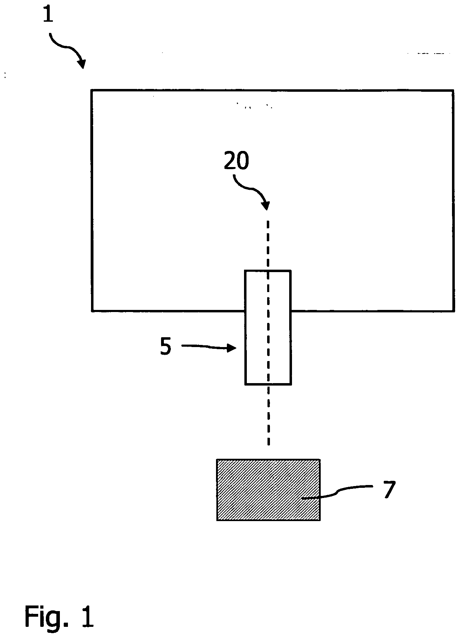

In Figur 1 ist eine Erodiermaschine 1 mit einem zu bearbeitenden Werkstück 7 dargestellt. Die Erodiermaschine 1 weist eine Elektrodenführung 5 auf, mit der eine Elektrode geführt werden kann. Mit der Bezugsziffer 20 ist die Längsachse der Elektrodenführung 5 gekennzeichnet. Auf eine detaillierte zeichnerische Darstellung weiterer Bestandteile der Erodiermaschine 1 wurde aus Gründen der Übersichtlichkeit verzichtet.

Die kontaktfreie Elektrodenführung 5 basiert auf einer magnetischen Führung, insbesondere Zentrierung von Drahtelektroden innerhalb der Elektrodenführung 5. In den folgenden Ausführungsbeispielen wird eine Zentrierung der Drahtelektroden innerhalb der Elektrodenführung 5 beschrieben, wobei jedoch grundsätzlich auch eine andere, von einer Zentrierung abweichende Führung der Elektrode möglich ist.

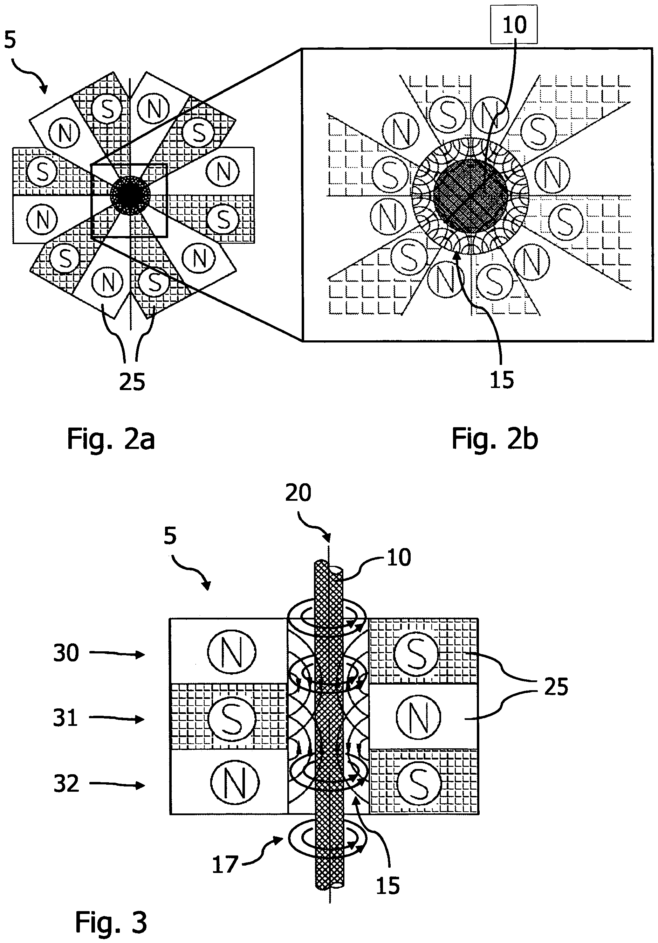

Wesentlich für das hier vorgestellte Prinzip ist ein erstes Magnetfeld der Elektrodenführung 5, welches für eine präzise, kontaktfreie Führung der Elektrode vorgesehen ist. Dieses Magnetfeld der Elektrodenführung 5 ist ein Dauermagnetfeld. Figur 2a zeigt eine erste Ausführung der magnetischen Elektrodenführung 5 in Draufsicht, d. h. die Längsachse der Elektrodenführung 5 verläuft senkrecht zur Blattebene. Die Figur 2b stellt einen Ausschnitt aus der Figur 2a vergrößert dar. Im ersten Beispiel besteht die Elektrodenführung 5 aus mehreren, ringförmig quer zur Längsachse der Elektrodenführung 5 angeordneten Dauermagneten 25. Die nebeneinander benachbarten Dauermagneten 25 weisen jeweils gegensätzliche magnetische Polung (S bzw. N) auf, so dass sie alle mit abwechselnder Polung angeordnet sind. Das daraus resultierende erste Magnetfeld 15 ist in der Figur 2b durch Feldlinien verdeutlicht. Das erste Magnetfeld 15 setzt sich hier aus symmetrischen Teilmagnetfeldern zusammen. Bei Bedarf können unsymmetrische Teilmagnetfelder gebildet werden, um eine von einer Zentrierung abweichende Führung einer Elektrode 10 zu erzielen.

Die in der Mitte der Elektrodenführung 5 angeordnete Elektrode 10 induziert ein zweites Magnetfeld, welches während der Bearbeitung durch einen zeitlich nicht konstanten Stromfluss durch die Elektrode 10 bewirkt wird. Die Elektrode 10 weist typischerweise die Form eines Drahtes oder eines Stabes auf. Aus Übersichtlichkeitsgründen ist das zweite Magnetfeld, induziert durch die stromdurchflossene Elektrode 10, in den Figuren 2a und 2b nicht dargestellt. Das erste Magnetfeld 15 der Elektrodenführung 5 beeinflusst das zweite, durch die stromdurchflossene Elektrode 10 induzierte Magnetfeld. Das erste Magnetfeld 15 der Elektrodenführung 5 überlappt sich im wesentlichen dabei mit dem zweiten, durch die Elektrode 10 induzierten Magnetfeld. So resultiert daraus eine Zentrierung des zweiten Magnetfeldes durch das erste Magnetfeld 15 der Elektrodenführung 5. Zusammen mit dem zweiten Magnetfeld wird die Elektrode 10 selbst zentriert, solange ein das zweite Magnetfeld induzierender Strom durch die Elektrode 10 fließt. Üblicherweise lässt man genau dann einen Stromfluss durch die Elektrode 10 zu, wenn eine Bearbeitung am Werkstück, also ein Materialabtrag am Werkstück, vorgesehen ist. So wird praktisch automatisch dafür gewährleistet, dass genau zum Zeitpunkt des Materialabtrags am Werkstück die Elektrode 10 präzise innerhalb der Elektrodenführung 5 zentriert wird.

Wie aus Figur 3 erkennbar, besteht die Elektrodenführung 5 in einem weiteren Ausführungsbeispiel aus mehreren, entlang der Längssachse 20 der Elektrodenführung 5 übereinander angeordneten Dauermagneten 25. In der Zeichnung sind beispielhaft drei Ebenen 30, 31, 32 von Magnetschichten dargestellt. Jede einzelne Ebene 30, 31, 32 der Magnetschichten kann durch die in Figuren 2a und 2b gezeigte und oben beschriebene Anordnung von Dauermagneten 25 ausgebildet sein. Je nach Bedarf können auch eine oder mehrere dieser Ebenen 30, 31, 32 der Magnetschichten wiederum aus einem einzigen Dauermagneten 25 in Ringform mit entsprechender radialer Magnetisierung bestehen.

Auf jeden Fall sind die jeweils benachbarten Ebenen 30, 31, 32 der Magnetschichten im direkten Vergleich zueinander bezüglich ihrer Polung radial versetzt, so dass insgesamt nicht nur die nebeneinander, sondern auch die übereinander benachbarten Dauermagneten 25 mit abwechselnder Polung angeordnet sind. So wird innerhalb der Elektrodenführung 5 nicht nur ein radial wirkendes Magnetfeld 15 erzeugt, sondern das Magnetfeld 15 wirkt nun auch axial und unterstützt zusätzlich die Zentrierung der Elektrode 10 entlang ihrer Länge an verschiedenen Ebenen 30, 31, 32. Insbesondere bei Bedarf einer langen Führung kann diese Ausführung von großem Vorteil sein.

Es sei darauf hingewiesen, dass in Figur 3 aus Gründen der Übersichtlichkeit das erste Magnetfeld 15 der Elektrodenführung 5 nur mit axial wirkenden Feldlinien verdeutlicht wurde und auf die radial wirkenden Feldlinien zeichnerisch verzichtet wurde. Hingegen ist das zweite Magnetfeld 17, induziert durch einen Stromfluss in der Elektrode 10, in Figur 3 ebenfalls durch Feldlinien dargestellt worden. Die Pfeilrichtung der Feldlinien ist von der Richtung des Stromflusses in der Elektrode 10 abhängig.

Insgesamt wird mit der vorgestellten Elektrodenführung 5 eine Lösung bereitgestellt, mit der eine kontaktfreie Führung von Elektroden 10, insbesondere Drahtelektroden, mittels magnetischen Kräften erzielt wird. Verschleißerscheinungen an der Elektrode 10 oder an der Elektrodenführung 5 werden so vermieden. Dabei nutzt man die Tatsache aus, dass ein stromdurchflossener Leiter ein Magnetfeld induziert, welches durch ein äußeres Magnetfeld in seiner Lage beeinflußt werden kann. Vorteilhafterweise kann solch eine Elektrodenführung 5 für sämtliche Drahtelektroden eingesetzt werden, die einen kleineren Drahtdurchmesser als den Innendurchmesser der Elektrodenführung 5 aufweisen.

## Patentansprüche

1. Erodiermaschine (1) zur erosiven Bearbeitung eines Werkstückes (7) mit einer Elektrodenführung (5) mit einer stromdurchflossenen Elektrode (10) zur funkenerosiven Bearbeitung eines Werkstückes (7), wobei ein erstes Magnetfeld (15) der Elektrodenführung (5) für eine kontaktfreie Führung der stromdurchflossenen Elektrode (10) vorgesehen ist, welches ein zweites, durch die stromdurchflossene Elektrode (10) induziertes Magnetfeld (17) beeinflusst, **dadurch gekennzeichnet, dass** die Elektrodenführung (b) aus mehreren, ringförmig quer zur Längsachse (20) der Elektrodenführung (5) angeordneten Dauermagneten (25) besteht und/oder dass die Elektrodenführung (S) aus mehreren, entlang der Längsachse (20) der Elektrodenführung (5) übereinander angeordneten Dauermagneten (25) besteht, wobei die reben- oder übereinander benachbarten Dauermagneten (15) mit abwechselnder Polung angeordnet sind.

2. Erodiermaschine (1) nach Anspruch 1, **dadurch gekennzeichnet, dass** sich das erste Magnetfeld (15) der Elektrodenführung (5) mit dem zweiten, durch die stromdurchflossene Elektrode (10) induzierten Magnetfeld (17) im wesentlichen überlappt.

3. Erodiermaschine (1) nach Anspruch 1 oder 2, **dadurch gekennzeichnet, dass** das zweite, durch die stromdurchflossene Elektrode (10) induzierte Magnetfeld durch das erste Magnetfeld, (15) der Elektrodenführung (5) innerhalb der Elektrodenführung (5) zentriert wird.

4. Erodiermaschine (1) nach einem der Ansprüche 1 bis 3, **dadurch gekennzeichnet, dass** die stromdurchflossene Elektrode (10) die Form eines Drahtes oder eines Stabes aufweist.

## Claims

1. Erosion machine (1) for the erosive machining of a workpiece (7), comprising an electrode guide (5) with an electrode (10) through which current flows for the machining of a workpiece (7) by the erosive effect of electrical sparks, wherein a first magnetic field (15) of the electrode guide (5) is provided for contactless guidance of the electrode (10) through which current flows and said first magnetic field influences a second magnetic field (17), which is induced by the electrode (10) through which current flows, **characterized in that** the electrode guide (5) consists of a number of permanent magnets (25) arranged in an annular manner transversely in relation to the longitudinal axis (20) of the electrode guide (5) and/or **in that** the electrode guide (5) consists of a number of permanent magnets (25) arranged one above the other along the longitudinal axis (20) of the electrode guide (5), the permanent magnets (25) that are next to one another or one above the other being arranged with alternating polarity.

2. Erosion machine (1) according to Claim 1, **characterized in that** the first magnetic field (15) of the electrode guide (5) substantially overlaps with the second magnetic field (17), which is induced by the electrode (10) through which current flows.

3. Erosion machine (1) according to Claim 1 or 2, **characterized in that** the second magnetic field, induced by the electrode (10) through which current flows, is centred within the electrode guide (5) by the first magnetic field (15) of the electrode guide (5).

4. Erosion machine (1) according to one of Claims 1 to 3, **characterized in that** the electrode (10) through which current flows has the form of a wire or a rod.

## Revendications

1. Machine à érosion (1) permettant l'usinage par érosion d'une pièce (7) et présentant un guide-électrode (5) doté d'une électrode (10) traversée par du courant en vue d'usiner une pièce (7) par érosion d'étincelles,
un premier champ magnétique (15) du guide-électrode (5) étant prévu pour guider sans contact l'électrode (10) traversée par le courant et agissant sur un deuxième champ magnétique (17) induit par l'électrode (10) traversée par le courant,
**caractérisée en ce que**
le guide-électrode (5) est constitué de plusieurs aimants permanents (25) disposés en anneau transversalement par rapport à l'axe longitudinal (20) du guide-électrode (5) et/ou
**en ce que** le guide d'électrode (5) est formé de plusieurs aimants permanents (25) disposés les uns au-dessus des autres le long de l'axe longitudinal (20) du guide-électrode (5), des aimants permanents (25) voisins l'un à côté de l'autre ou l'un au-dessus de l'autre étant placés à polarités alternées.

2. Machine à érosion (1) selon la revendication 1, **caractérisée en ce que** le premier champ magnétique (15) du guide-électrode (5) recouvre essentiellement le deuxième champ magnétique (17) induit par l'électrode (10) traversée par le courant.

3. Machine à érosion (1) selon les revendications 1 ou 2, **caractérisée en ce que** le deuxième champ magnétique induit par l'électrode (10) traversée par le courant est centré par le premier champ magnétique (15) du guide-électrode (5) à l'intérieur du guide-électrode (5).

4. Machine à érosion (1) selon l'une des revendications 1 à 3, **caractérisée en ce que** l'électrode (10) traversée par le courant présente la forme d'un fil ou d'un barreau.
